# EUROPEAN PATENT APPLICATION

(11) **EP 2 107 341 A1**
(43) Date of publication of application: **07.10.2009**
(21) Application number: 08300165.1
(22) Date of filing: 31.03.2008
(51) Int. Cl.: G01D 4/00, G05B 15/00, G06F 17/00

(54) **A system for monitoring and controlling consumer appliances through an energy service provider**

(71) Applicant: Alcatel Lucent, 75008 Paris (FR)
(72) Inventor: The designation of the inventor has not yet been filed
(74) Representative: Brose, Gerhard

(57) **Abstract**

The invention concerns a system for monitoring and controlling consumer appliances through an energy service provider, the system comprising a metering device for monitoring energy consumption by an appliance, the metering device comprising power monitoring circuitry and an interface to a data transmission network, and the system comprising a management device located remotely from the metering device, the management device interfacing the metering device through the data transmission network, wherein the metering device interfaces a controller for controlling the appliance, the management device is configured to accept a request from a client, the request comprising an operational state change of the appliance, and the management device is further configured, in response to accepting the request, to transmit instructions for controlling the appliance to the metering device through the data transmission network.

## Description

The invention relates to a system for monitoring and controlling consumer appliances through an energy service provider according to the preamble of claim 1.

A smart meter generally refers to a type of advanced meter that identifies consumption in more detail than a conventional meter and optionally, but generally, communicates that information via some network back to the local utility for monitoring and billing purposes. The term "smart meter" typically refers to an electrical meter, but the term is also occasionally applied to the measurement of natural gas and water consumption. Similar meters usually referred to as time-of-use or interval meters have existed for years but smart meters usually involve a different technology mix such as real-time or near real-time reads, power outage notification, and power quality monitoring. Smart meters are also believed to be a less costly alternative to traditional interval or time-of-use meters and are intended to be implemented on a wide scale to all customer classes, including residential customers.

United States Patent No. US 6,980,973 B1 discloses an example of a smart utility meter and associated payment service. A downside of this known solution is its inability to control the attached consumer devices in addition to monitoring their energy consumption. An object of the invention is thus to propose an improved approach to smart metering that allows for remote control of the monitored appliances.

This object is achieved by a system according to the teaching of claim 1.

A main idea of the invention is the reuse of known smart metering infrastructures for the additional purpose of home automation. Home automation, also called domotics, is a field within building automation specializing in the automation requirements of private homes and in the application of automation techniques for the comfort and security of their residents. While building automation techniques such as light and climate control, control of doors and window shutters, and security and surveillance systems are also used in home automation, additional functions include the control of multi-media home entertainment systems, automatic plant watering and pet feeding, automatic scenes for dinners and parties, and a more user-friendly control interface.

Further developments of the invention can be gathered from the dependent claims and the following description.

In the following the invention will be explained further making reference to the attached drawings.

A system for monitoring and controlling consumer appliances through an energy service provider comprises a metering device for monitoring energy consumption by an appliance. This metering device in turn comprises energy monitoring circuitry as well as an interface to a data transmission network. The metering device further interfaces a controller for controlling the appliance.

In addition to the metering device, the system comprises a management device located remotely from the metering device. This management device interfaces the metering device through the data transmission network. In response to an operational state change request from a client, the management device transmits instructions to the metering device. These instructions tell the metering device how to control the appliance to comply with the client request.

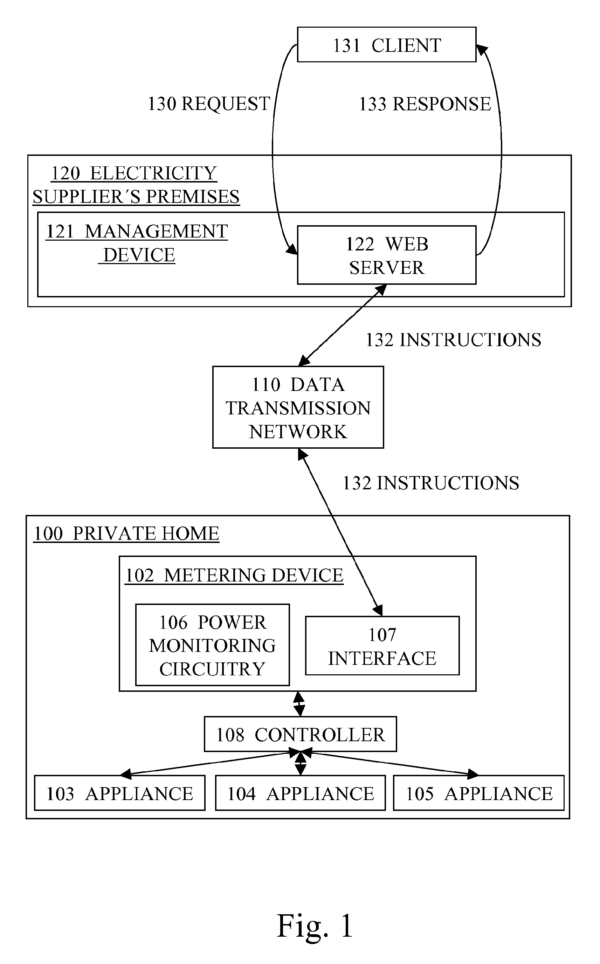

Fig. 1 schematically shows a system according to an embodiment of the invention for monitoring and controlling consumer appliances through an electricity supplier.

In the following, a system according to the invention is elucidated by way of example, referencing Fig. 1.

Fig. 1 shows a client 131, electricity supplier's premises 120, a data transmission network 110, and a private home 100. A management device 121 is located on the electricity supplier's premises 120 and comprises a web server 122.

A metering device 102, a controller 108, and appliances 103, 104, 105 are located in the private home 100, the metering device 102 comprising power monitoring circuitry 106 and an interface 107.

The client 131 is configured to transmit a request 130 to the web server 122 and receive a corresponding response 133. The web server 122 in turn is connected through the data transmission network 110 with the interface 107 for sending instructions 132 to the interface 107. Additionally, the web server may 122 may be configured for receiving data such as metering information (not depicted) from the interface 107. The metering device 102 is connected with each of the appliances 103, 104, and 105 through the controller 108.

In the system of Fig. 1, an electricity supplier is used as an example of an energy service provider. Other embodiments of the invention may pertain to the distribution of energy by means of, for example, natural gas, district heat, or water.

The system of Fig. 1 interfaces three appliances 103, 104, and 105, each connected indirectly to the metering device 102. This metering device 102 contains conventional power monitoring circuitry 106 for monitoring power consumption by the appliances 103, 104, and 105, as may be used in a traditional power meter. For the case that one or more of the appliances 103, 104, and 105 are capable of generating, as opposed to consuming, electricity, the metering device 102 is also configured to monitor power generation by the appliances 103, 104, and 105.

Although not a necessity, the metering device 102 comprises a display (not depicted) for information on current or accumulated energy consumption by the appliances 103, 104, and 105. Additionally, the cost associated with these consumption data may be displayed. The display is mainly intended for use by residents of the home where the metering device 102 and attached appliances 103, 104, and 105 are installed. Liquid crystal displays (LCDs) are commonly employed for this purpose.

In addition to the monitoring circuitry, the metering device 102 contains the interface 107 to the data transmission network 110. Typically, the data transmission network 110 takes the form of a local telephone network to which the metering device may be connected by means of a digital subscriber line (DSL). An alternative embodiment may make use of a wireless network such as the Global System for Mobile Communications (GSM) or Worldwide Interoperability for Microwave Access (WiMAX), standardized as IEEE 802.16, without deviating from the spirit of the invention.

For controlling the appliances 103, 104, and 105 in addition to monitoring them, the metering device 102 interfaces the controller 108 that may be integrated with the metering device, integrated with any or each of the appliances, or external to both the metering device and the appliances. The controller 108 may take the form of a programmable logic controller, also known as a programmable controller, as used in the automation of industrial processes. The controller 108 may be connected to the appliances 104, 104, and 105 by means of a wireless link, power line communication (PLC), or other electrical conductors. Preferably, the controller 108 communicates with the attached appliances 103, 104, and 105 by means of a short-range in-house protocol. Several domotic standards for controlling appliances have been defined and include INSTEON, X10, and PLC BUS.

Located remotely from the metering device 102 and connected to it through the data transmission network 110 is the management device 121, operated centrally by the electricity supplier on its premises 120. The management device 121 may take the form of a general-purpose computer running adapted software, or it may be a piece of hardware specifically configured for the task at hand. Typically, the management device 121 will include functionality for monitoring consumption information received from the metering device 102 for billing purposes. This feature is known in the art as telemetering.

In addition to its connection to the metering device 102 through the data transmission network 110, the management device 121 is capable of receiving requests 130 from the client 131. Such requests 130 pertain to the operational state of any of the appliances within the scope of the metering device 102 and controller 108. Selectable operational states are diverse and depend on the type of appliance controlled. For example, a simple household device supports only the basic operational states of "on" and "off", a heater supports a plurality of temperatures, and an air conditioning system supports selected levels of humidity. For any of these appliances, a request 130 would typically comprise the desired state of the appliance, possibly along with a time constraint for performing the indicated change of state.

Upon receiving a request 130, the management device 121 generates, based on the contents of the request 130, a set of instructions 132 for execution by the metering device 102 or controller 108. The instructions 132 may be identical to the request 130 or may be specifically adapted to the data transmission network 110, metering device 102, or subject appliance 103, 104, or 105. The management device 121 may also use an internal or external database to convert or enrich the request 130 for the purpose of generating the instructions 132. Eventually, the resulting instructions 132 are transmitted to the metering device 102 by means of the data transmission network 110.

The client 131 may take the form of a standard personal computer, a personal digital assistant (PDA) or cellular mobile phone. It may be running a software provided by the electricity supplier, delivered as part of the operating system, or obtained from a third-party vendor. A mobile client 131 provides the further advantage that its user, typically the electricity subscriber, is enabled to control his or her appliances remotely, such as away from home. Potential applications of this capability are known from the field of home automation.

In the given embodiment, to connect the client 131 to the management device 121 by means of a standard transport protocol, the management device 121 comprises a web server 122. By web server is meant a computer program responsible for accepting HTTP requests from the client 131 and serving it HTTP responses along with optional data content. (The term "web server" may also refer to a computer that runs a program as described above.) Consequently, the request 130 is transferred according to HTTP, and will be answered by the corresponding HTTP response 133. For the purpose of creating the HTTP request 130 and the HTTP response 133, the client 131 comprises an HTTP user agent, commonly known as a web browser. Upon accepting request 130, the web server 122 generates an HTML document (not depicted) and returns it to the client 131 as part of the response 133. This document contains an acknowledgment of the request 130 as well as supplemental information provided by the management device 121.

In an alternative embodiment of the invention, to allow the balancing of load imposed on the underlying energy distribution network, the system comprises a load control system. By load control is meant a method of ensuring that the electrical load on the distribution system does not exceed the amount that can be generated by the electricity supplier. In addition to processing client requests, the management device will monitor predefined trigger conditions and act accordingly if any of these are met. Such trigger conditions may include a threshold of the load imposed on the power grid. Alternatively or in addition, trigger conditions may be based on the current time, as the wholesale price of energy varies widely throughout the day. If a trigger condition is met, for example, indicating a peak load of the grid, the management device will instruct the metering device to curtail energy consumption by some or all of the attached appliances.

In a further embodiment, to allow for the automatic activation of appliances during off-peak hours, the management device, in addition to the energy curtailment described above, may also choose to activate appliances that are waiting to be served. Such activation may take place upon detecting the presence of excess energy in the distribution network. Eligibility of an appliance for delayed activation may be signaled to the management device by the metering device when consumption data are transmitted. When generating a schedule for appliance activation, the management system may take into account the expected energy requirement of the respective appliance based on recent use statistics. As a more advanced feature, subscribers may prioritize the energy requirements of each appliance. Depending on the assigned priority, the energy service provider commits to supplying an appliance within a specified timeframe. Reversely, subscribers are charged according to their requested priorities. For example, energy that is requested to be delivered immediately is associated with a higher cost compared to energy delivered in response to a lower priority request. Thus, subscribers are offered an incentive for leaving more flexibility to the energy service provider.

## Claims

1. A system for monitoring and controlling consumer appliances through an energy service provider (120), the system comprising
a metering device (102) for monitoring energy consumption by an appliance (103, 104, 105), the metering device (102) comprising power monitoring circuitry (106) and an interface (107) to a data transmission network (110), and
a management device (121) located remotely from the metering device (102), the management device (121) interfacing the metering device (102) through the data transmission network (110),
**characterized in that**
the metering device (102) interfaces a controller (108) for controlling the appliance (103, 104, 105),
the management device (121) is configured to accept a request (130) from a client (131), the request (130) comprising an operational state change of the appliance, and
the management device (121) is further configured, in response to accepting the request (130), to transmit instructions (132) for controlling the appliance (103, 104, 105) to the metering device (102) through the data transmission network (110).

2. A system according to claim 1, **characterized in that** the energy service provider (120) is a public utility and energy distribution is effected by either of the following:
electric power,
natural gas,
district heat, and
water.

3. A system according to claim 2, **characterized in that** the metering device 102 is further configured for monitoring electricity generation by the appliance (103, 104, 105).

4. A system according to claim 1, **characterized in that** the management device (121) comprises a web server (122) and the request (130) is an HTTP request.

5. A system according to claim 4, **characterized in that** the management device (121) is further configured, in response to accepting the request (130), to serve the client (131) an HTTP response (133) comprising an HTML document.

6. A system according to claim 1, **characterized in that** the system comprises a load control system and that the management device (121) is further configured, in response to a trigger condition, to transmit instructions for curtailing energy consumption by the appliance (103, 104, 105) to the metering device (102) through the data transmission network (110).

7. A system according to claim 6, **characterized in that** the trigger condition comprises at least one of the following:
a threshold of the load imposed on the energy distribution system operated by the energy service provider (120) and
a time of day.

8. A system according to claim 1, **characterized in that** the interface (107) interfaces a local telephone network and that the metering device (102) and the management device (121) are configured for communicating by means of a digital subscriber line.

9. A system according to claim 1, **characterized in that** the interface (107) interfaces a wireless network, that the metering device (102) and the management device (121) each interface a radio transmitter and a radio receiver, and that the metering device (102) and the management device (121) are configured for communicating through electromagnetic waves of radio frequency.

10. A system according to claim 9, **characterized in that** the interface (107) interfaces a GSM network and that the metering device (102) and the management device (121) are configured for communicating by means of a General Packet Radio Service.

11. A system according to claim 9, **characterized in that** the interface (107) comprises a WiMAX subscriber unit, that the management device (121) comprises a WiMAX base station, and that the metering device (102) and the management device (121) are configured for communicating according to the IEEE 802.16 standard.

12. A system according to claim 1, **characterized in that** the metering device (102) and the appliance (103, 104, 105) are connected by either of the following domotic standards:
INSTEON,
X10, and
PLC BUS.

13. A system according to claim 1, **characterized in that** the metering device (102) comprises a display unit for displaying information on at least one of the following:
energy consumption by the appliance (103, 104, 105) and
information on the cost of energy consumption by the appliance (103, 104, 105).
